# EUROPÄISCHE PATENTSCHRIFT

(11) **EP 0 636 467 B1**
(45) Veröffentlichungstag und Bekanntmachung des Hinweises auf die Patenterteilung: **10.02.1999**
(21) Anmeldenummer: 94111134.6
(22) Anmeldetag: 18.07.1994
(51) Int. Cl.: B29C 47/02

(54) **Verfahren und Vorrichtung zum Beschichten eines um eine Achse rotierenden Körpers**
Method and apparatus for coating rotating members
Méthode et appareil pour le revêtement de corps en rotation

(30) Priorität: 30.07.1993 DE 4325653
(43) Veröffentlichungstag der Anmeldung: 01.02.1995
(73) Patentinhaber: BAYER AG, 51368 Leverkusen (DE)
(72) Erfinder: Grimm, Wolfgang, Dipl.-Ing., D-51381 Leverkusen (DE); Brüning, Dirk, Dipl.-Ing., D-51379 Leverkusen (DE); Recker, Klaus, Dr., D-51061 Köln (DE); Ruprecht, Hans-Dieter, Dr., D-51061 Köln (DE); Müller, Heinz, D-51373 Leverkusen (DE)

(56) Entgegenhaltungen:
- EP-A- 0 523 509
- CA-A- 945 019
- US-A- 4 366 972
- US-A- 4 466 854
- MODERN PLASTICS INTERNATIONAL., Bd.23, Nr.7, Juli 1993, LAUSANNE CH Seiten 20 - 22, XP000383437 PETER MAPLESTON 'Turnkey coating system covers pressure gas pipe'
- PATENT ABSTRACTS OF JAPAN vol. 12, no. 155 (C-494) 12. Mai 1988 & JP-A-62 266 175 (KONOSHIROKU PHOTO IND.)
- PATENT ABSTRACTS OF JAPAN vol. 9, no. 323 (P-414) 18. Dezember 1985 & JP-A-60 150 053 (KONISHIROKU) 7. August 1985

## Beschreibung

Die Erfindung betrifft ein Verfahren und eine Vorrichtung zum Beschichten eines um eine Achse rotierenden Körpers, wobei zwischen dem Körper und einer ein Polyurethan bildendes Reaktionsgemisch ausstoßenden Düse eine Relativbewegung in Richtung der Rotationsachse stattfindet, so daß der Auftrag in schraubenlinienförmigen, sich überlappenden Windungen erfolgt, vgl. z.B. die CA-A-945019.

Das Beschichten rotierender Körper nach diesem Verfahren ist allgemein bekannt und läßt sich in gleicher Weise für die Herstellung von Hohlkörpern, insbesondere Rohren, anwenden, indem man einen entfernbaren Kern oder Dorn beschichtet.

Je nach den durch die Parameter, wie Umfangsgeschwindigkeit und Vorschubgeschwindigkeit des Körpers bzw. der Düse, gegebenen Bedingungen treten Schwierigkeiten auf. Insbesondere besteht die Gefahr von Lufteinschlüssen und der ungenügenden Verbindung einzelner Windungen. Deshalb hat man bei der Herstellung von Rohren durch Beschichten eines Kerns schon versucht, das Reaktionsgemisch auf ein Trägerband aufzugeben und dieses um einen Kern zu wickeln, wobei der zwischen den einzelnen Windungen vorhandene Spalt mit Reaktionsgemisch ausgegossen wird (EP 0 523 509 A2). Durch das zusätzliche Vergießen des Spaltes ist natürlich der verfahrenstechnische und maschinelle Aufwand groß. Außerdem ist dieses Verfahren zum Beschichten von Körpern nicht geeignet, weil man auf das Trägerband nicht verzichten kann.

Es besteht die Aufgabe, das eingangs beschriebene Verfahren so zu verbessern, daß einwandfreie Beschichtungen ökonomisch herstellbar sind.

Diese Aufgabe wird dadurch gelöst, daß eine Breitschlitzdüse verwendet wird, welche parallel zur Rotationsachse unter einem Winkel α angestellt ist, wobei die Relativbewegung und die Reaktionsgeschwindigkeit des Reaktionsgemisches derart mit der Umfangsgeschwindigkeit des rotierenden Körpers abgestimmt sind, daß die aufeinanderfolgenden Windungen sich schuppenförmig überlappen und sich nahtlos miteinander verbinden. Die Auslaßöffnung der Breitschlitzdüse kann ein Länge/Breite-Verhältnis von 10 bis 300, vorzugsweise 100 bis 250, aufweisen.

Das neue Verfahren ist besonders geeignet für die Beschichtung von Walzen mit einem Polyurethan-Elastomer, wie sie in der Stahlindustrie, Förder- und Transportindustrie sowie in der Papierindustrie eingesetzt werden. Außerdem lassen sich danach Rohre mit Außenbeschichtung für den industriellen und den Off-Shore-Bereich sowie Rohre mit Innenbeschichtung für die hydraulische Förderung von abrasiven Gütern herstellen. Erforderlichenfalls muß man die zu beschichtenden Flächen vorher mit einem Haftvermittler versehen.

Es lassen sich aber auch Rohre oder sonstige Hohlkörper nach dem neuen Verfahren herstellen, indem man einen entfernbaren Kern beschichtet. In diesem Fall muß man auf den Kern ein Trennmittel auftragen oder ihn mit einer Trennfolie umwickeln. Schließlich läßt sich das neue Verfahren auch dazu benutzen, Rohre mit einem Wärmedämmantel aus Polyurethan-Hartschaumstoff zu versehen. Gegenüber den bekannten Verfahren ist markant, daß der Auftrag der Windungen nicht nebeneinander, sondern überlappend erfolgt. Eigentlich sind bei diesem Verfahren Lufteinschlüsse zu befürchten und die Gefahr, daß sich die einzelnen Windungen nicht miteinander verbinden, liegt an sich sehr nahe. Umso überraschender ist es, daß sich keine Lufteinschlüsse zeigen und daß die Windungen ohne Bildung einer Haut oder Naht miteinander verfließen und eine ausreichend glatte Oberfläche der Beschichtung bilden. Es hat sich gezeigt, daß das neue Verfahren nicht nur für die Innen- und Außenbeschichtung von rotationssymmetrischen Körpern geeignet ist, sondern daß auch Körper beschichtbar sind, welche über Länge und/oder Querschnitt unterschiedliche Durchmesser aufweisen. Es bietet sich an, das Verfahren mittels einer Programmsteuerung durchzuführen. Bei unregelmäßig profilierten Körpern ist es notwendig, die Breitschlitzdüse stets in gleichem Abstand und unter gleicher Neigung zu der zu beschichtenden Oberfläche des Körpers zu führen. Wegen der Breite der Breitschlitzdüse sind natürlich bezüglich der ungleichmäßigen Geometrie von Körpern Grenzen gesetzt. Auch ist es möglich, durch Verändern des Winkels α an gewünschten Stellen unterschiedliche Beschichtungsdicken zu erzielen.

Ein wesentlicher Parameter des Verfahrens ist die Austrittsviskosität des Reaktionsgemisches aus der Breitschlitzdüse. Um im Zusammenhang hiermit die gewünschte Beschichtungsdicke zu erhalten, ist es häufig erforderlich, die Düsengeometrie zu ändern. Deswegen kann es notwendig sein, die Breitschlitzdüse gegen eine solche anderer Geometrie auszutauschen oder die Schlitzhöhe und Schlitzbreite einstellbar zu gestalten, was äußerst schwierig sein dürfte, weil das Düseninnere auch entsprechend angepaßt werden müßte.

Besonders vorteilhaft ist es, Breitschlitzdüsen zu verwenden, welche gewährleisten, daß die Austrittsgeschwindigkeit des Gemisches aus dem Düsenschlitz überall gleich groß ist und daß das austretende Gemisch an jeder Stelle des Schlitzes gleich alt ist.

Generell gilt, daß bei niedrigen Viskositäten die Schlitzhöhe geringer sein kann, während sie bei höheren Viskositäten größer sein muß. Auf diese Weise läßt sich das Druckgefälle in der Düse relativ niedrig halten, so daß beim Dosieren der Reaktionskomponenten keine Hochdruckmischköpfe erforderlich sind und somit die preisgünstigeren Niederdruckmischköpfe den Anforderungen in der Regel genügen. Allerdings haben Hochdruckmischköpfe gegenüber Niederdruckmischköpfen den Vorteil der Selbstreinigung durch einen Ausstoßkolben.

Die überlappenden Windungen verbinden sich sowohl physikalisch als auch zumindest zum Teil chemisch. Bei Außenbeschichtungen verursacht die Schwindungsspannung ein Zusammenziehen und wirkt der durch die Exothermie der Reaktion bewirkten thermischen Ausdehnung entgegen. Dadurch entstehen Scherspannungen, welche den beschriebenen Vorgang in der Weise unterstützen, daß sich weder eine Haut noch eine Naht ausbildet.

Das Verfahren ist geeignet, Körper verschiedenster Durchmesser zu beschichten bzw. herzustellen. Bei großen Durchmessern verwendet man langsamer reagierende Systeme als bei kleineren Durchmessern. Bei der Innenbeschichtung von Körpern sollte man die Exothermie so einstellen, daß sich keine zu hohen Schrumpfspannungen bilden, d.h., man sollte mit möglichst vorreagierten Produkten, mit Prepolymeren, arbeiten.

Mit dem neuen Verfahren lassen sich auch Systeme verarbeiten, die Füllstoffe enthalten, und zwar vorzugsweise in Form von Glaskugeln, Hohlglaskugeln und Glasfasern bis etwa 6 mm Länge. In die Beschichtung lassen sich aber auch grobmaschige Gewebebänder, Glasfaserrovings, Drähte usw. einarbeiten.

Vorzugsweise wird der Winkel α dem Winkel der sich beim Beschichten ausbildenden Schulter angepaßt. Vorzugsweise beträgt der Winkel α 5 bis 40°, besonders bevorzugt weniger als 25°.

Das heißt, da man den Winkel der Schulter berechnen bzw. empirisch ermitteln kann, ist er unter Berücksichtigung der weiteren Parameter vorbekannt, und man stellt den Winkel, unter dem die Breitschlitzdüse zu der zu beschichtenden Oberfläche eingestellt wird, ein. Auf diese Weise wird, abgesehen von dem Moment des Anlaufens bis zum Erreichen der gewünschten Dicke, ein gleichmäßiger Abstand der Düsenöffnung von der Auftragsstelle erreicht. Dieser Abstand beträgt zweckmäßigerweise 1 bis 10 mm.

Gemäß einer besonders vorteilhaften Durchführungsform des neuen Verfahrens richtet man die Breitschlitzdüse in einer Ebene parallel zur Rotationsachse aus, so daß der Auftragsfilm beim Austritt aus der Düse entsprechend dem Wickelwinkel verstreckt wird.

Es hat sich gezeigt, daß bei Anwendung dieser Maßnahme eine qualitativ hochwertige Beschichtung erzielbar ist, die frei von Lufteinschlüssen ist.

Man setzt dabei die Breitschlitzdüse zweckmäßigerweise bei Außenbeschichtung im oberen, nach oben drehenden Viertel an, bei Innenbeschichtung im unteren, nach oben drehenden Viertel. Hierdurch wird das Miteinanderverbinden der Windungen besonders begünstigt.

Vorzugsweise wird die Umfangsgeschwindigkeit am größten Durchmesser der aufzutragenden Beschichtung kleiner eingestellt, als die Austrittsgeschwindigkeit des Reaktionsgemisches aus der Breitschlitzdüse beträgt.

Durch diese Maßnahme wird die gefürchtete Bläschenbildung an den Rändern des aufgetragenen Bindungsfilmes vermieden.

Vorzugsweise werden Reaktionsgemische mit einer Gießzeit von 0,3 Sekunden bis 10 Minuten verarbeitet.

Es hat sich gezeigt, daß Reaktionsgemische mit dieser Gießzeit besonders gut verarbeitbar sind und im Zusammenhang mit den sonstigen Verfahrensparametern eine Beschichtung mit ausreichend glatter Oberfläche garantieren. Das heißt, die einzelnen, schuppenartig aufeinandergelegten Windungen verbinden sich und verfließen so miteinander, daß eine homogene Beschichtung entsteht.

Es versteht sich, daß sich die Beschichtungsdicke zu Beginn des Auftragsvorganges erst aufbauen muß. Bei Walzenbeschichtungen benötigt man deshalb immer eine Beschichtungsbreite, welche über die spätere Nutzbreite der Beschichtung so weit hinausgeht, daß der Aufbaubereich und der Abbaubereich der Beschichtungsdicke außerhalb dieser Nutzbreite liegen.

Die neue Vorrichtung zum Beschichten eines um eine Achse rotierenden Körpers mit einem Polyurethan bildenden Reaktionsgemisch geht aus von einer Lagerung und einem Rotationsantrieb für den Körper sowie einer Breitschlitzdüse, wobei entweder die Breitschlitzdüse mit einem parallel zur Rotationsachse des Körpers wirkenden Vorschubantrieb versehen ist oder dem Körper ein in Richtung parallel zur Rotationsachse wirkender Vorschubantrieb zugeordnet ist.

Das Neue ist darin zu sehen, daß die Breitschlitzdüse mit der zu beschichtenden Fläche des Körpers einen entgegen der Vorschubrichtung öffnenden spitzen Winkel α einschließt.

Dabei ergeben sich die im Zusammenhang mit dem neuen Verfahren beschriebenen vorteilhaften Effekte.

In der Zeichnung ist die neue Vorrichtung in einem Ausführungsbeispiel für Rohraußenbeschichtung und in einem Ausführungsbeispiel für Rohrinnenbeschichtung rein schematisch dargestellt und nachstehend näher erläutert. Es zeigen:
Fig. 1 Die Vorrichtung für Rohraußenbeschichtung im Längsschnitt,
Fig. 2 die gleiche Vorrichtung in der Stirnansicht,
Fig. 3 die Vorrichtung für Rohrinnenbeschichtung im Längsschnitt und
Fig. 4 die gleiche Vorrichtung in der Stirnansicht.

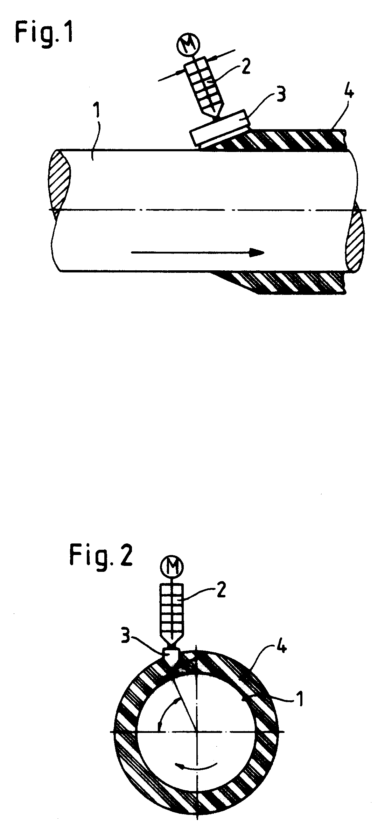

In Fig. 1 und 2 ist ein Rohr 1 in einer nicht dargestellten Rotationsvorrichtung gelagert. In Richtung der Längsachse dieses Rohres 1 ist ein Mischkopf 2 mit einer Breitschlitzdüse 3 längs verschiebbar angeordnet. Der Vorschub erfolgt mit gleichbleibender Geschwindigkeit. Die Breitschlitzdüse ist in Rohrlängsrichtung ausgerichtet und schließt damit einen Winkel α von 15° ein, und sie ist über dem nach oben drehenden Viertel des Rohres 1 unter einem Winkel β von 85° vor dem Zenit angeordnet. Die aufgetragene Gemischschicht ist mit 4 bezeichnet.

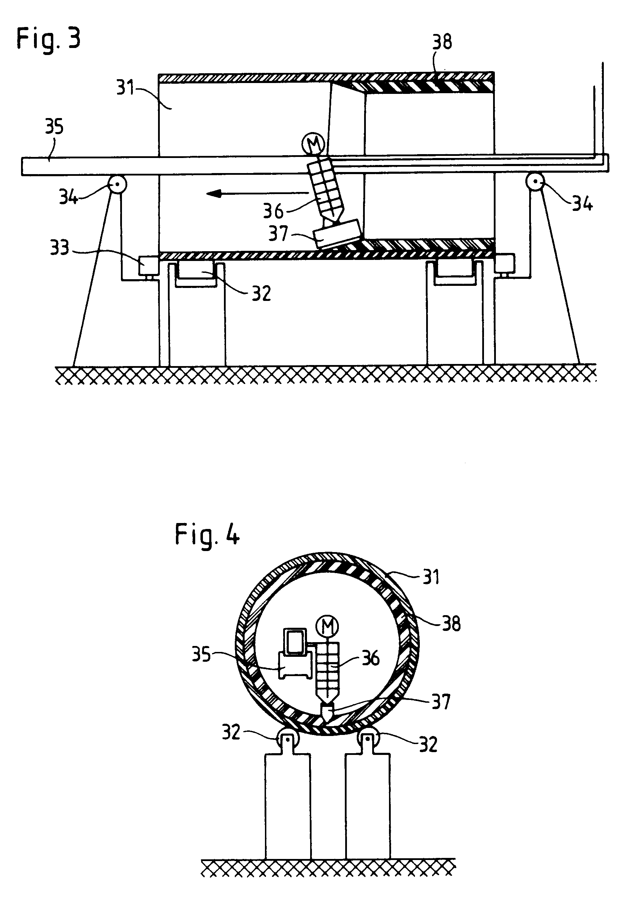

In Fig. 3 und 4 ist ein Rohr 31 auf Rollen 32 gelagert und wird von Rollen 33 in Rotation versetzt. Durch das Rohr 31 wird ein auf angetriebenen Rollen 34 gelagerter Tragarm 35 geschoben, an welchem ein Mischkopf 36 mit einer Breitschlitzdüse 37 befestigt ist. Diese Breitschlitzdüse 37 ist an der tiefsten Stelle des Rohres 31 in Rohrlängsrichtung ausgerichtet und schließt mit der Rohrinnenwandung einen Winkel α von 8° ein. Die aufgetragene Gemischschicht ist mit 38 bezeichnet.

### Beispiel 1

Eine Stahlwalze mit einem Kerndurchmesser von 240 mm wird sandgestrahlt und mit einem Zweikomponenten-Haftvermittler mit ca. 75 g/m² mittels Rollen beschichtet. Die Bahnlänge der Walze beträgt 1.400 mm.

Es wird eine 23 mm dicke PUR-Elastomerschicht durch Auftragen eines Reaktionsgemisches nachstehender Rezeptur mittels einer Breitschlitzdüse von 125 x 0,6 mm aufgetragen. Die Düse ist in ihrer Längsrichtung parallel zur Walze und senkrecht um 15° geneigt so eingespannt, daß die untere Kante ca. 5 mm über der Walzenoberfläche schwebt. Der Auftreffpunkt des Reaktionsgemisches liegt bei ca. 85° zur waagerechten Achse der Walze. Die Drehzahl beträgt 13 min⁻¹, der Vorschub 208 mm/min und der Gesamtausstoß 4.270 g/min.

Das Reaktionsgemisch entspricht folgender Rezeptur:

### Komponente A:

- 85 Gew.-Teile: Polyether aus Trimethylpropan, Propylenoxid (85 Gew.-%) und Ethylenoxid (15 Gew.-%), OH-Zahl 35
- 15 Gew.-Teile: Diethyltoluylendiamin (Isomerengemisch)
- 0,05 Gew.-Teile: Diazabicyclooctan
- Viskosität (25°):: 1.050 mPas

### Komponente B:

Reaktionsprodukt aus:
- 100 Gew.-Teilen: Polyether aus 1,2-Propylenglykol und Propylenoxid, OH-Zahl 56
- 79 Gew.-Teilen: Diphenylmethandiisocyanat (70 Gew.-% 4,4'-MDI, 30 Gew.-% 2,4'-MDI)
- NCO-Gehalt:: 12,2 %
- Viskosität (25°):: 1.600 mPas

### Mischungsverhältnis

100 Gew.-Teile Komponente A
84 Gew.-Teile Komponente B
Topfzeit: 5 Sekunden

### Eigenschaften des Elastomers:

- Härte (Shore A): 90
- Zugfestigkeit (MPa): 20
- Reißdehnung (%): 450

### Beispiel 2

Eine Stahlwalze mit einem Kerndurchmesser von 260 mm wird mit einer 22 mm dicken Beschichtung versehen. Die Walzendrehzahl liegt bei 28 min⁻¹ und der Vorschub der Breitschlitzdüse bei 182 mm/min. Der Anstellwinkel α der Breitschlitzdüse wurde mit 17° eingestellt.

Es wird folgende Rezeptur verwendet:

### Komponente A:

- 100 Gew.-Teile: eines Prepolymeren mit 9,8 Gew.-% NCO, bestehend aus 4,4'-Diphenylmethandiisocyanat und einem Polyethercarbonat mit einem mittleren Molgewicht von 2.000

### Komponente B:

- 19,5 Gew.-Teile: eines Diamins 3,5-Bis-thiomethyl-toluylendiamin (überwiegend 2,4-Diaminoverbindung)

### Komponente C:

- 5 Gew.-Teile: eines Polyol-Amingemisches bestehend aus
- 1,5 Gew.-Teilen: Diethyltoluylendiamin mit einer NH-Zahl von 630 und
- 3,5 Gew.-Teilen: eines Polyethercarbonats mit einem mittleren Molekulargewicht von 2.000.

Dabei wird die Komponente A mit einer Temperatur von 90°C mit einem Ausstoß von 3.000 g/min dosiert, die Komponente B mit einer Temperatur von 25°C mit einem Ausstoß von 585 g/min und die Komponente C mit einer Temperatur von 50°C und mit einem Ausstoß von 150 g/min.

### Beispiel 3

Zur Ausrüstung eines Stahlrohrs der Nennweite 360 mm und einer Länge von 5.000 mm mit einer 15 mm starken Verschleißschutz-Innenbeschichtung wird wie folgt verfahren:

Es wird die gleiche Rezeptur wie in Beispiel 1 verwendet.

Auf die frisch sandgestrahlte Oberfläche wird ein Haftvermittler in einer Menge von 80 g/m² durch Sprühen und/oder Rollen aufgetragen. Nach der vorgeschriebenen Ablüftzeit von einer Stunde wird der an einem Träger befestigte, mechanisch arbeitende Mischkopf, bestückt mit einer parallel zum Rohr angeordneten Breitschlitzdüse (100 x 0,6 mm), in einem Winkel von 10° geneigt und in einem Abstand der Unterkante von 5 mm, gemessen von der inneren Rohroberfläche, in horizontaler Richtung mit einer Vorschubgeschwindigkeit von 300 mm/min durch das Rohr gezogen. Das Rohr ist in eine Drehvorrichtung gespannt und wird mit einer Drehzahl von 36 min⁻¹ rotiert. In der Mischkammer des Mischkopfes werden mit einem Ausstoß von 2860 g/min das Polyol A und mit einem Ausstoß von 2.400 g/min das Isocyanat-Prepolymer B dosiert und durch Rühren kontinuierlich vermischt. Der Beschichtungsvorgang ist nach 17 Minuten beendet.

## Patentansprüche

1. Verfahren zum Beschichten eines um eine Achse rotierenden Körpers (1, 31), wobei zwischen dem Körper (1, 31) und einer ein Polyurethan bildendes Reaktionsgemisch ausstoßenden Düse (3, 37) eine Relativbewegung in Richtung der Rotationsachse stattfindet, so daß der Auftrag in schraubenlinienförmigen, sich überlappenden Windungen erfolgt, dadurch gekennzeichnet, daß eine Breitschlitzdüse (3, 37) verwendet wird, welche parallel zur Rotationsachse unter einem Winkel α angestellt ist, und wobei die Reaktionsgeschwindigkeit des Reaktionsgemisches und die Relativbewegung derart mit der Umfangsgeschwindigkeit des rotierenden Körpers (1, 31) abgestimmt sind, daß die aufeinanderfolgenden Windungen sich schuppenförmig überlappen und sich nahtlos miteinander verbinden, daß der Winkel α dem Winkel der sich beim Beschichten ausbildenden Schulter angepaßt wird, so daß die Düsenöffnung einen Abstand von 1 bis 10 mm von der Auftragsstelle hat, und daß die Umfanggeschwindigkeit am größten Durchmesser der aufzutragenden Beschichtung kleiner eingestellt wird, als die Austrittsgeschwindigkeit des Reaktionsgemisches aus der Breitschlitzdüse (1, 37) beträgt.

2. Verfahren nach Anspruch 1, dadurch gekennzeichnet, daß Reaktionsgemische mit einer Gießzeit von 0,3 Sekunden bis 10 Minuten verarbeitet werden.

3. Vorrichtung zum Beschichten eines um eine Achse rotierenden Körpers (1, 31) mit einem Polyurethan bildenden Reaktionsgemisch nach Anspruch 1 oder 2, bestehend aus einer Lagerung und einem Rotationsantrieb für den Körper (33) sowie aus einer Breitschlitzdüse (3, 37), wobei entweder die Breitschlitzdüse (3, 37) mit einem parallel zur Rotationssache des Körpers (1, 31) wirkenden Vorschubantrieb versehen ist oder dem Körper (1, 31) ein in Richtung parallel zur Rotationssache wirkender Vorschubantrieb zugeordnet ist, dadurch gekennzeichnet, daß die Breitschlitzdüse (3, 37) mit der zu beschichtenden Fläche des Körpers (1, 31) einen entgegen der Vorschubrichtung öffnenden, spitzen Winkel α einschließt.

4. Vorrichtung nach Anspruch 3, dadurch gekennzeichnet, daß die Breitschlitzdüse (3, 37) in einer Ebene parallel zur Rotationsachse ausgerichtet ist.

## Claims

1. Method for coating a body (1, 31) rotating about an axis, whereby a relative movement takes place in the direction of the axis of rotation between the body (1, 31) and a nozzle (3, 37) which ejects a reaction mixture forming a polyurethane, so that application is effected in helical overlapping convolutions,
characterised in that a slot die (3, 37) is used which is disposed parallel to the axis of rotation at an angle α, and whereby the rate of reaction of the reaction mixture and the relative movement are synchronised with the circumferential speed of the rotating body (1, 31) in such a way that the successive convolutions overlap in scale-like manner and connect together seamlessly, in that the angle α is adapted to the angle of the shoulder which forms in the course of coating, so that the nozzle aperture has a spacing of 1 to 10 mm from the point of application, and in that the circumferential speed at the largest diameter of the coating to be applied is adjusted to be less than the speed at which the reaction mixture emerges from the slot die (3,37).

2. Method according to Claim 1, characterised in that reaction mixtures are processed having a pouring-time from 0.3 seconds to 10 minutes.

3. Device for coating a body (1, 31) rotating about an axis with a reaction mixture according to Claim 1 or 2 forming a polyurethane, consisting of a bearing and a rotary drive (33) for the body as well as a slot die (3, 37), whereby either the slot die (3, 37) is provided with a feed drive acting parallel to the axis of rotation of the body (1, 31) or a feed drive acting in the direction parallel to the axis of rotation is assigned to the body (1, 31), characterised in that the slot die (3, 37) includes together with the surface of the body (1, 31) to be coated an acute angle α opening out in the direction contrary to the direction of feed.

4. Device according to Claim 3, characterised in that the slot die (3, 37) is aligned in a plane parallel to the axis of rotation.

## Revendications

1. Procédé pour l'enduction d'un corps (1, 31) tournant autour d'un axe, dans lequel, entre le corps (1, 31) et une filière (3, 37) éjectant un mélange réactionnel formant du polyuréthanne, on obtient un mouvement relatif en direction de l'axe de rotation, si bien que l'application a lieu sous forme d'enroulements hélicoïdaux qui se chevauchent, caractérisé en ce qu'on utilise une filière à fente large (3, 37) qui est disposée parallèlement à l'axe de rotation en formant un angle α, et dans lequel on module la vitesse de réaction du mélange réactionnel et le mouvement relatif avec la vitesse périphérique du corps rotatif (1, 31) de telle sorte que les enroulements successifs se chevauchent à la manière d'écailles et se relient l'un à l'autre en l'absence de joints, en ce qu'on règle l'angle α par rapport à l'angle formé par l'épaulement que l'on obtient lors de l'enduction de telle sorte que l'ouverture de la filière se trouve à une distance de 1 à 10 mm de l'endroit d'application, et en ce qu'on règle la vitesse périphérique sur le plus grand diamètre de l'enduction à appliquer pour qu'elle soit inférieure à la vitesse de sortie du mélange réactionnel hors de la filière à fente large (1, 37).

2. Procédé selon la revendication 1, caractérisé en ce qu'on traite des mélanges réactionnels avec une vitesse de coulée de 0,3 seconde à 10 minutes.

3. Dispositif pour l'enduction d'un corps (1, 31) tournant autour d'un axe, avec un mélange réactionnel formant un polyuréthanne, selon la revendication 1 ou 2, constitué par un palier et par un entraînement en rotation pour le corps (33), ainsi que par une filière à fente large (3, 37), dans lequel, soit on munit la filière à fente large (3, 37) d'un entraînement d'avance s'exerçant parallèlement à l'axe de rotation du corps (1, 31), soit on attribue au corps (1, 31) un entraînement d'avance s'exerçant dans une direction parallèle à l'axe de rotation, caractérisé en ce que la filière à fente large (3, 37) comprend, avec la surface du corps (1, 31) à enduire, un angle aigu α s'ouvrant à l'encontre de la direction d'avance.

4. Dispositif selon la revendication 3, caractérisé en ce que la filière à fente large (3, 37) est disposée en alignement dans un plan parallèle à l'axe de rotation.
